# FASCICULE DE BREVET EUROPEEN

(11) **EP 2 726 215 B1**
(45) Date de publication et mention de la délivrance du brevet: **28.10.2015**
(21) Numéro de dépôt: 12731526.5
(22) Date de dépôt: 21.05.2012
(51) Int. Cl.: B05B 11/00

(54) **BAGUE DE FIXATION ET DISTRIBUTEUR DE PRODUIT FLUIDE UTILISANT UNE TELLE BAGUE**
BEFESTIGUNGSRING UND SPENDER FÜR EIN FLIESSFÄHIGES PRODUKT MIT EINEM SOLCHEN RING
FIXING RING AND A FLUID PRODUCT DISPENSER USING SUCH A RING

(30) Priorité: 23.05.2011 FR 1154470
(43) Date de publication de la demande: 07.05.2014
(73) Titulaire: Aptar France SAS, 27110 Le Neubourg (FR)
(72) Inventeur: BRAHIM, Xavier, F-27190 Conches En Ouche (FR); LECOMTE, Olivier, F-76780 Saint Lucien (FR)
(74) Mandataire: CAPRI
(86) Numéro de dépôt international: PCT/FR2012/051126
(87) Numéro de publication internationale: WO 2012/160302

(56) Documents cités:
- FR-A1- 2 769 860
- FR-A1- 2 908 117
- FR-A1- 2 918 964
- US-A1- 2002 104 853

## Description

La présente invention concerne une bague de fixation pour fixer un organe de distribution, tel qu'une pompe ou une valve sur un col d'un réservoir. La bague de fixation comprend des moyens de réception apte à recevoir la pompe ou la valve et une jupe d'accrochage destinée à venir s'engager autour du col du réservoir. Une telle bague de fixation est fréquemment utilisée dans les domaines de la parfumerie, de la cosmétique ou encore de la pharmacie pour fixer des pompes ou des valves sur des cols de réservoir afin de constituer des distributeurs de produit fluide. US 2002/0104853 décrit une bague de fixation selon le préambule de la revendication 1.

En général, le col du réservoir forme un renfort annulaire externe d'accrochage qui fait saillie radialement vers l'extérieur. La jupe d'accrochage de la bague de fixation présente une configuration appropriée pour permettre un accrochage autour et/ou sous le renfort annulaire du col du réservoir. Conventionnellement, le renfort annulaire est situé dans la partie supérieure du col de sorte que la partie inférieure présente un diamètre réduit. De ce fait, la bague de fixation comprend conventionnellement une paroi interne définissant une première section de paroi supérieure venant en prise avec le renfort annulaire du col et une seconde section de paroi interne inférieure qui s'étend sous le renfort annulaire hors de contact du col. En d'autres termes, la seconde section de paroi inférieure s'étend autour du col en étant espacée de celui-ci par un espace cylindrique. Il n'est cependant pas exclu que l'extrémité inférieure de la seconde section vienne en contact avec le réservoir. Il s'agit là d'une conception tout à fait classique pour un distributeur de produit fluide utilisant une bague de fixation pour fixer une pompe ou une valve dans le col d'un réservoir.

Bien entendu, pour compléter le distributeur, la pompe ou la valve est pourvue d'un poussoir déplaçable axialement en va-et-vient sur lequel l'utilisateur peut appuyer à l'aide d'un ou de plusieurs doigt(s). Le déplacement axial du poussoir génère une distribution de produit fluide, sous forme dosée ou non. En général, le poussoir comprend un orifice de distribution, par exemple sous la forme d'un gicleur, qui est situé sur une paroi latérale du poussoir. Par conséquent, l'orifice de distribution présente une orientation angulaire par rapport au réservoir.

Pour certains distributeurs de produit fluide, il est intéressant, nécessaire ou indispensable de fixer l'orientation angulaire de l'orifice de distribution par rapport au réservoir. Pour cela, il est déjà connu d'utiliser la bague de fixation pour déterminer l'orientation de l'orifice de distribution, comme par exemple dans le document FR-2 737 471. Ce document décrit une bague de fixation comprenant une double indexation pour fixer la position angulaire du gicleur du poussoir par rapport au récipient. Pour ce faire, la bague de fixation comprend une échancrure dans sa partie haute pour bloquer le gicleur en rotation et une échancrure en partie basse pour fixer l'orientation de la bague par rapport au réservoir, qui comprend un ergot d'indexation coopérant avec l'échancrure basse. De cette manière, la bague de fixation est orientée par rapport au réservoir et le poussoir est orienté par rapport à la bague de fixation. Plus précisément, la partie basse de la bague de fixation est formée par une jupe d'accrochage conventionnelle définissant des profils d'accrochage destinés à venir en prise sous le renfort annulaire du col. La jupe est constituée d'une pluralité de pattes souples disposées côte à côte. Pour réaliser l'échancrure basse, une patte a été supprimée. La bague de fixation doit être orientée de telle sorte que l'échancrure basse soit alignée axialement avec l'ergot d'indexation formé sous le renfort annulaire du col. L'orientation de la bague de fixation est ainsi unique, puisque les pattes de la jupe ne peuvent pas coopérer avec l'ergot d'indexation du col. Ce système d'orientation angulaire est certes efficace, mais ne permet pas l'utilisation d'une bague de fixation conventionnelle sur le col particulier pourvu de l'ergot d'indexation. En d'autres termes, le récipient ne peut pas être standardisé, étant donné qu'il doit toujours être associé à la bague de fixation pourvue de l'échancrure basse.

La présente invention a pour but de remédier à cet inconvénient précité de l'art antérieur en définissant une bague de fixation permettant de fixer la position angulaire de l'orifice de distribution du poussoir, mais qui peut être montée sur n'importe quel type de col standard ou conçu spécialement pour fixer la position angulaire.

Pour ce faire, la présente invention prévoit une bague de fixation selon la revendication 1. Alors que l'indexation de la bague sur le col dans le document FR-2 737 471 est réalisée par une échancrure formée par une patte de fixation manquante, l'indexation de la présente invention est réalisée par une patte d'orientation qui fait saillie radialement vers l'intérieur. Cette patte va coopérer avec une rainure axiale d'orientation formée dans le col, comme on le verra ci-après.

Selon une forme de réalisation avantageuse, la patte d'orientation est souple de manière à être déplaçable élastiquement par rapport à la seconde section de paroi interne. De cette manière, même si la patte d'orientation fait saillie radialement vers l'intérieur, la jupe d'accrochage peut être montée sur n'importe quel col en déformant temporairement la patte d'orientation pour lui permettre de passer au-dessus du renfort annulaire classique du col du réservoir. On peut donc se servir de la bague de fixation de l'invention sur n'importe quel col classique, et bien entendu celui de l'invention spécialement conçu pour l'orientation angulaire.

Selon un autre aspect de l'invention, la patte d'orientation ne s'étend que sur la seconde section de paroi interne. Ainsi, la patte d'orientation ne vient pas en prise avec le col une fois la bague montée sur le col. De cette manière, la patte d'orientation est totalement inopérante sur un col de réservoir classique. Et sur un col de l'invention spécialement conçu pour l'orientation angulaire, la patte d'orientation permet l'indexation de la bague par rapport au col sans pour autant interférer avec le col une fois la bague de fixation en position finale de montage.

Selon une forme de réalisation pratique, la patte d'orientation s'étend dans une fenêtre formée dans la jupe, cette fenêtre s'étendant au moins sur la seconde section de paroi interne. La fenêtre permet de conférer de la souplesse à la patte d'orientation en dégageant un espace vide autour d'elle. Par exemple, la patte d'orientation s'étend librement vers le haut en direction de la première section de paroi interne. La patte d'orientation est ainsi fixée au restant de la bague au niveau du bord inférieur de la fenêtre.

Selon un autre aspect intéressant de la présente invention, la jupe d'accrochage comprend une paroi externe, la patte d'orientation étant décalée radialement vers l'intérieur par rapport à la paroi externe de la jupe. De cette manière, la patte d'orientation peut être déformée radialement vers l'extérieur pour passer sur le renfort annulaire, sans pour autant sortir de l'encombrement de la jupe définie par sa paroi externe. Le décalage de la patte d'orientation vers l'intérieur permet ainsi de ménager un espace de débattement pour la patte lorsqu'elle est déformée vers l'extérieur lors du passage du renfort annulaire du col.

Ainsi, la patte d'orientation peut présenter une épaisseur de paroi sensiblement identique à celle de la jupe au niveau de la seconde section de paroi inférieure, mais la patte d'orientation est décalée radialement vers l'intérieur de manière à faire saillie vers l'intérieur par rapport à la paroi interne de la jupe et être décalée vers l'intérieur par rapport à la paroi externe de la jupe.

La présente invention définit également un distributeur de produit fluide comprenant un réservoir de produit fluide comprenant un col définissant une ouverture, le col formant un renfort annulaire externe d'accrochage, un organe de distribution, tel qu'une pompe ou une valve, et une bague de fixation, telle que définie ci-dessus, pour fixer l'organe de distribution dans l'ouverture du col, la première section de paroi interne supérieure venant en prise avec le renfort annulaire externe d'accrochage du col et la seconde section de paroi interne inférieure s'étendant sous le renfort annulaire externe d'accrochage hors de contact du col, la patte d'orientation s'étendant hors de contact du col en position finale de montage. Avantageusement, le renfort annulaire externe d'accrochage forme une rainure axiale d'orientation dans laquelle la patte d'orientation passe sensiblement sans déformation lors du montage de la jupe autour du col. L'avantage de la rainure axiale d'orientation par rapport à l'ergot d'indexation du document FR-2 737 471 est qu'il n'interfère pas avec la fixation de la bague sur le col. En effet, on peut utiliser une bague de fixation conventionnelle sur un tel col sans pour autant nuire à la fixation de la bague. Le réservoir de produit fluide avec un col rainuré selon l'invention peut constituer un réservoir standard sur lequel des bagues de fixation conventionnelles ou selon l'invention peuvent être montées. Selon un aspect de l'invention, la patte d'orientation est positionnée en dessous et hors de contact du renfort d'accrochage, lorsque la bague est montée sur le col en position finale de montage. Ainsi, la patte d'orientation permet l'indexation angulaire de la bague par rapport au col du réservoir, mais ne vient pas en prise avec le col du réservoir une fois la bague montée sur le col. Ceci permet d'utiliser la bague de fixation de l'invention sur n'importe quel col, qu'il soit pourvu ou non d'une rainure axiale d'orientation.

Selon une autre caractéristique de l'invention, la première section de paroi interne comprend un profil d'accrochage qui vient se loger sous renfort d'accrochage, lorsque la bague est montée sur le col en position finale de montage.

L'esprit de l'invention réside dans le fait que la bague de fixation, ainsi que le réservoir constituent des éléments constitutifs universels, qui permettent l'orientation angulaire de la bague sur le col lorsqu'ils coopèrent entre eux, mais qui peuvent également être utilisés individuellement avec des éléments standards. La patte d'orientation de la bague permet l'orientation de la bague sur le col, mais n'empêche pas le montage de la bague sur un col conventionnel. De même, le col particulier du réservoir avec sa rainure d'orientation axiale permet l'orientation de la bague de fixation de l'invention, mais peut également être associée à une bague de fixation standard dépourvue de patte d'orientation. La souplesse de la patte d'orientation permet son passage sur le renfort annulaire d'un col de réservoir standard ou du col du réservoir de l'invention. Cela signifie que la bague de fixation de l'invention et le réservoir de l'invention constituent des éléments standards qui peuvent, selon l'application choisie, être associés pour fixer l'orientation du poussoir ou non. Ceci n'est pas le cas du document de l'art antérieur FR-2 737 471, dans lequel la bague de fixation ne peut être montée sur le col du réservoir qu'avec une orientation imposée. On peut aussi noter que la bague de fixation peut être montée sur le col du réservoir de manière automatisée ou manuellement.

L'invention sera maintenant plus amplement décrite, en référence aux dessins joints, donnant à titre d'exemple non limitatif, un mode de réalisation de l'invention.

Sur les figures :
La figure 1 est une vue en coupe transversale verticale à travers un distributeur de produit fluide selon une forme de réalisation de l'invention,
La figure 2 est une vue en perspective légèrement de dessous de la bague de fixation de l'invention,
La figure 3a est une vue en perspective agrandie du détail A de la figure 2, et
Les figures 4a, 4b et 4c sont des vues en perspective découpées agrandies visant à illustrer l'opération de montage de la bague de fixation de l'invention sur un col de réservoir de l'invention.

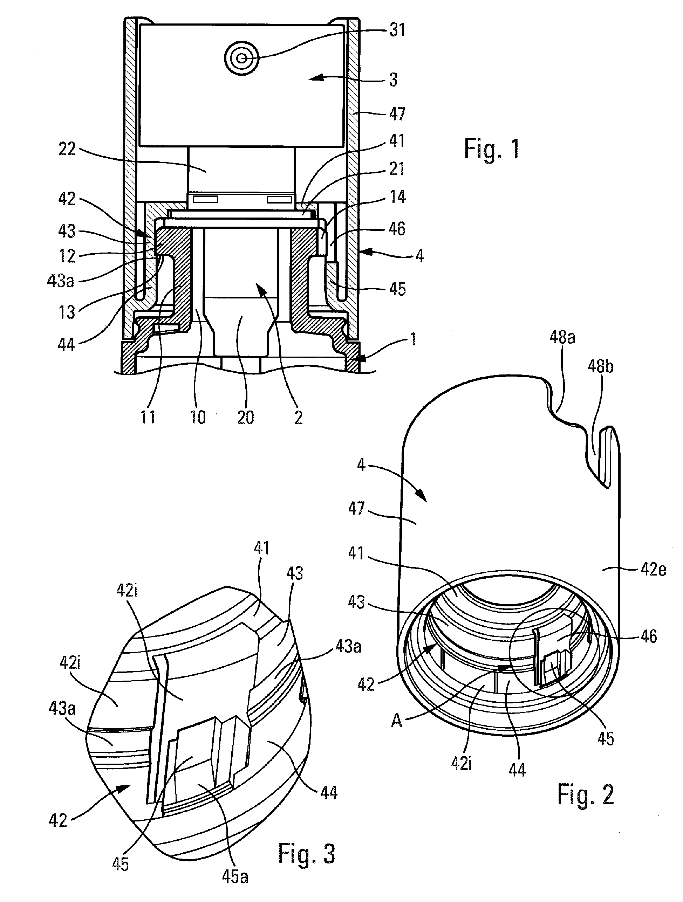

On se référera tout d'abord à la figure 1 pour décrire de manière générale les éléments constitutifs d'un distributeur de produit fluide selon l'invention. Le distributeur comprend un réservoir de produit fluide 1, un organe de distribution 2, un poussoir 3, et une bague de fixation 4.

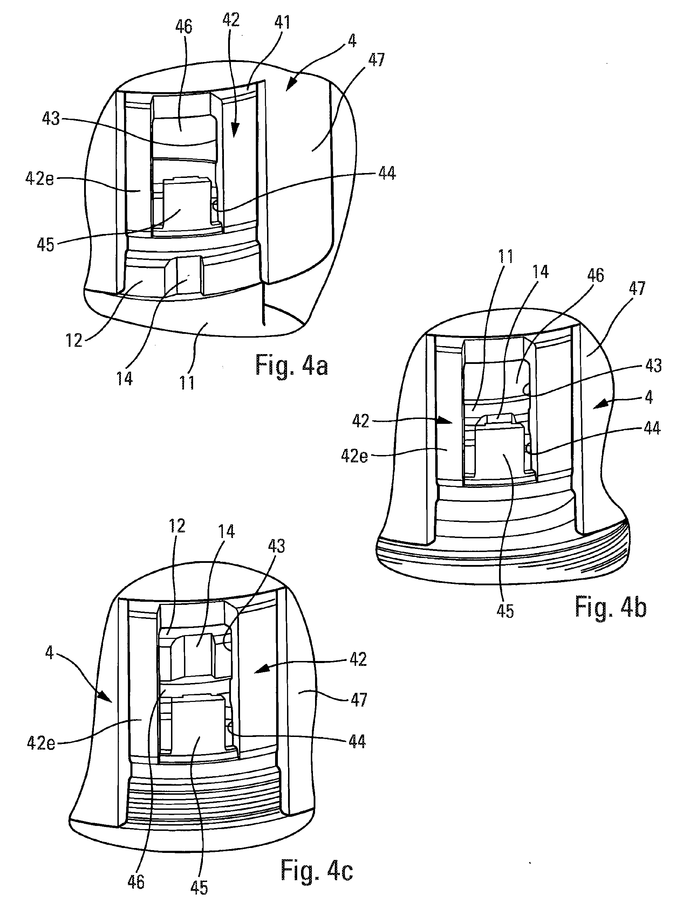

Le réservoir 1 comprend un col 11 qui définit une ouverture 10 faisant communiquer l'intérieur du réservoir avec l'extérieur. Le col 11 est pourvu d'un renfort annulaire externe d'accrochage 12 qui fait saillie radialement vers l'extérieur à proximité de l'extrémité supérieure du col. De cette manière, le renfort annulaire 12 définit un épaulement inférieur 13 orienté vers le bas. En d'autres termes, le col 11 définit deux diamètres externes différents, à savoir un diamètre maximal au niveau du renfort annulaire 12 et un diamètre minimum au niveau de la partie inférieure du col 11. Les deux diamètres étant reliés entre eux par l'épaulement 13. Selon une caractéristique de l'invention, le renfort annulaire 12 forme une rainure axiale d'orientation 14 qui s'étend sur toute la hauteur du renfort 12, comme on peut le voir sur la figure 1. La rainure axiale 14 est également visible sur les figures 4a et 4c. Dans le mode de réalisation utilisé pour illustrer la présente invention, il n'y a qu'une seule rainure axiale d'orientation 14, mais le col peut comprendre plusieurs rainures d'orientation sans pour autant sortir du cadre de l'invention. Le réservoir de produit fluide 1 peut être réalisé en n'importe quel matériau approprié, comme par exemple du verre, une matière plastique appropriée ou même du métal.

L'organe de distribution 2 peut être une pompe ou une valve comprenant un corps 20 définissant une collerette de fixation 21 et une tige d'actionnement 22 sur laquelle est monté le poussoir 3 qui forme un orifice de distribution latéral 31. De manière tout à fait conventionnelle, en appuyant sur le poussoir 3, la tige d'actionnement 22 est enfoncée dans le corps 2, et du produit fluide est alors distribué à travers l'orifice de distribution 31. Le corps 20 de l'organe de distribution 2 est maintenu fixement à l'intérieur de l'ouverture 10 du col 11 par la collerette de fixation 21.

La bague de fixation 4 a pour fonction classique de maintenir fermement et de manière étanche l'organe de distribution 2 dans le col 11 du réservoir. Pour cela, la bague de fixation comprend des moyens de réception 41 pour la collerette de fixation 21 de l'organe de distribution 2, ainsi qu'une jupe d'accrochage 42 qui vient en prise autour du col 11. Dans le mode de réalisation utilisé pour illustrer la présente invention, la bague de fixation 4 comprend en outre et de manière optionnelle une frette d'habillage 47 qui entoure de manière concentrique la jupe d'accrochage 42. Un espace annulaire est d'ailleurs défini entre la jupe 42 et la frette 47.

On se référera maintenant aux figures 2 et 3 pour décrire en détail la bague de fixation 4. La jupe d'accrochage 42 comprend une paroi externe 42e et une paroi interne 42i. Au niveau de la paroi interne 42i, la jupe définit une première section de paroi interne supérieure 43 et une seconde section de paroi interne inférieure 44 disposées axialement l'une au-dessus de l'autre. La première section supérieure 43 est destinée à venir en prise avec le renfort annulaire 42 du col 11 en position finale de montage, alors que la seconde section inférieure 44 s'étend en dessous du renfort annulaire 12 autour du col 11 en position finale de montage, en restant cependant hors de contact du col. De ce fait, un espace annulaire cylindrique est défini entre la seconde section inférieure 44 et le col 11, comme on peut clairement le voir sur la figure 1. L'extrémité inférieure de la section inférieure 44 peut même venir en contact avec le réservoir. On peut également remarquer que la première section supérieure 43 forme un profil d'accrochage 43a destiné à venir se loger, par exemple par encliquetage, sous l'épaulement 13 formé par le renfort annulaire 12. De cette manière, la jupe d'accrochage 42 est maintenue de manière parfaitement stable autour du col 11. Il s'agit là d'une caractéristique conventionnelle pour une bague de fixation dans le domaine de la parfumerie, de la cosmétique ou encore de la pharmacie.

Selon l'invention, la jupe d'accrochage 42 est pourvue d'une patte d'orientation 45 qui est formée au niveau de la seconde section inférieure 44. La patte 45 est reliée par son extrémité inférieure au restant de la bague, de sorte qu'elle présente une certaine souplesse permettant une déformation élastique. La patte 45 est formée au niveau d'une fenêtre 46 qui s'étend au niveau de la seconde section inférieure 44, et optionnellement également au niveau de la première section supérieure 43. La fenêtre 46 peut même s'étendre jusqu'au niveau des moyens de réception 41, pour des questions de facilité de moulage. La patte d'orientation 45 fait saillie radialement vers l'intérieur par rapport à la seconde section inférieure 44, de sorte qu'en position finale de montage comme représentée sur la figure 1, la patte 45 s'étend légèrement en dessous et hors de contact du renfort annulaire 12. Avantageusement, la patte d'orientation 45 est également décalée vers l'intérieur par rapport à la paroi externe 42e de la jupe, comme on peut le voir sur les figures 4a à 4c. Ce décalage vers l'intérieur permet de ménager un espace de débattement permettant à la patte d'être déformée radialement vers l'extérieur sans sortir de l'encombrement de la jupe. Cette caractéristique est avantageuse, notamment lorsque la jupe d'accrochage est associée à une frette externe venant en serrage autour de la jupe, en remplacement de la frette intégrée 47.

En se référant à nouveau à la figure 1, on peut voir que la patte d'orientation 45 est disposée axialement en dessous de la rainure axiale d'orientation 14 du col 11 en position finale de montage de la bague sur le col du réservoir.

On se référera maintenant aux figures 4a à 4c pour décrire en détail une opération de montage d'une bague selon l'invention sur un réservoir selon l'invention. Sur ces figures, la frette externe 47 a été découpée pour laisser voir la patte d'orientation 45 et le col 11. Sur la figure 4a, la bague de fixation 4 est disposée au-dessus du col 11 avec la patte d'orientation 45 déjà alignée axialement avec la rainure axiale d'orientation 14. En abaissant axialement la bague de fixation 4, on parvient à la position de la figure 4b, dans laquelle on peut voir que la patte d'orientation 45 est engagée dans la rainure d'orientation 14. La seconde section inférieure 44 est alors située au niveau du renfort annulaire 12. La patte d'orientation 45 peut passer à travers la rainure axiale 14 sensiblement sans déformation, ou avec une très légère déformation. On comprend aisément que le passage de la patte 45 dans la rainure 14 impose l'orientation angulaire de la bague par rapport au col, ou inversement. En continuant à abaisser axialement la bague de fixation 4 sur le col 11 du réservoir, on parvient à la position finale de montage représentée sur la figure 4c. La patte d'orientation 45 est alors disposée axialement sous le renfort annulaire 12, de façon alignée avec la rainure axiale 14. La première section supérieure 43 de la jupe est alors en prise avec le renfort annulaire 12. La patte d'orientation 45 s'étend alors librement sans aucune contrainte, puisqu'elle n'est pas en contact du col 11. Bien que la patte 45 ne soit plus engagée dans la rainure d'orientation 14, l'orientation de la bague par rapport au réservoir est figée par la fixation réalisée entre la première section supérieure 43 et le renfort annulaire 12 du col.

La bague de fixation 4 est ainsi positionnée angulairement de manière précise et imposée par rapport au réservoir. D'autre part, le poussoir 3 est également orienté de manière angulaire par rapport à la bague de fixation 4, par exemple aux moyens d'échancrures 48a, 48b formées au niveau du bord supérieur de la frette 47, et dans lesquelles l'orifice de distribution 31 est en prise. Lorsque l'orifice de distribution 31 est dans l'échancrure 48a, le poussoir est totalement immobilisé, aussi bien axialement qu'en rotation, et lorsque l'orifice de distribution 31 est dans l'échancrure plus profonde 48b, le poussoir peut être déplacé axialement pour permettre la distribution de produit fluide, mais il est toujours bloqué en rotation. Il ne s'agit là que d'un exemple non limitatif permettant d'imposer l'orientation angulaire des poussoirs par rapport à la bague de fixation 4. Il existe d'autres moyens bien connus de l'art antérieur.

On vient de voir qu'il est possible grâce à la bague de fixation et au réservoir de l'invention de fixer l'orientation angulaire de la bague de fixation par rapport au réservoir. Cependant, grâce à la souplesse de la patte d'orientation 45, il est possible de monter la bague de fixation de l'invention sur un réservoir classique dont le col est dépourvu de rainure(s) axiale(s) d'orientation, et même sur le réservoir de l'invention en dehors de la rainure axiale. La souplesse de la patte lui permet de se déformer radialement vers l'extérieur au niveau du renfort annulaire et de se détendre ensuite pour gagner sa position finale en dessous et hors de contact du renfort, comme représenté sur la figure 1. Le passage de la patte 45 au-dessus du renfort annulaire 12 est encore favorisé par un chanfrein inférieur 45a permettant d'éviter une butée franche de la patte 45 sur le bord supérieur du col.

A l'inverse, il est également possible de monter une bague de fixation classique sans patte d'orientation sur le col de l'invention pourvu d'une ou de plusieurs rainure(s) axiale(s) d'orientation 14. En effet, la rainure d'orientation 14 est formée dans le renfort annulaire 12 et ne perturbe pas la fixation d'une bague de fixation classique venant en prise sous l'épaulement 13, qui n'est interrompue que très localement au niveau de la rainure 14. De ce fait, aussi bien la bague de fixation 4 que le réservoir 1 de l'invention peuvent coopérer entre eux, mais également avec des éléments standards.

## Revendications

1. Bague de fixation (4) pour fixer un organe de distribution (2), tel qu'une pompe ou une valve, sur un col (11) d'un réservoir (1), la bague (4) comprenant des moyens de réception (41) aptes à recevoir l'organe de distribution (2) et une jupe d'accrochage sensiblement cylindrique (42) destinée à venir s'engager autour du col (11) du réservoir (1), la jupe (42) définissant une paroi interne (42i) définissant une première section de paroi interne supérieure (43) destinée à venir en prise avec le col (11) en position finale de montage et une seconde section de paroi interne inférieure (44) destinée à s'étendre hors de contact du col (11) en position finale de montage, **caractérisée en ce que** la jupe d'accrochage (42) comprend une patte d'orientation angulaire (45) distincte de la première section supérieure (43), la patte d'orientation angulaire (45) interrompant la seconde section de paroi interne inférieure (44) et fait saillie radialement vers l'intérieur par rapport à cette seconde section (44), la patte d'orientation angulaire (45), en position finale de montage, étant hors de contact du col (11).

2. Bague de fixation selon la revendication 1, dans laquelle la patte d'orientation (45) est souple de manière à être déplaçable élastiquement par rapport à la seconde section de paroi interne (44).

3. Bague de fixation selon l'une quelconque des revendications précédentes, dans laquelle la patte d'orientation (45) ne s'étend que sur la seconde section de paroi interne (44).

4. Bague de fixation selon la revendication 1 ou 2, dans laquelle la patte d'orientation (45) s'étend dans une fenêtre (46) formée dans la jupe (42), cette fenêtre (46) s'étendant au moins sur la seconde section de paroi interne (44).

5. Bague de fixation selon l'une quelconque des revendications précédentes, dans laquelle la patte d'orientation (45) s'étend librement vers le haut en direction de la première section de paroi interne (43).

6. Bague de fixation selon l'une quelconque des revendications précédentes, dans laquelle la jupe d'accrochage (42) comprend une paroi externe (42e), la patte d'orientation (45) étant décalée radialement vers l'intérieur par rapport à la paroi externe de la jupe.

7. Distributeur de produit fluide comprenant :
- un réservoir de produit fluide (1) comprenant un col (11) définissant une ouverture (10), le col (11) formant un renfort annulaire externe d'accrochage (12),
- un organe de distribution (2), tel qu'une pompe ou une valve, et
- une bague de fixation (4) selon l'une quelconque des revendications précédentes pour fixer l'organe de distribution (2) dans l'ouverture (10) du col (11), la première section de paroi interne supérieure (43) venant en prise avec le renfort annulaire externe d'accrochage (12) du col (11) et la seconde section de paroi interne inférieure (44) s'étendant sous le renfort annulaire externe d'accrochage (12) hors de contact du col (11), la patte d'orientation (45) s'étendant hors de contact du col (11) en position finale de montage.

8. Distributeur selon la revendication 7, dans lequel le renfort annulaire externe d'accrochage (12) forme une rainure axiale d'orientation (14) dans laquelle la patte d'orientation (45) passe sensiblement sans déformation lors du montage de la jupe (42) autour du col (11).

9. Distributeur selon la revendication 7 ou 8, dans lequel la patte d'orientation (45) est positionnée en dessous et hors de contact du renfort d'accrochage (12) en position finale de montage.

10. Distributeur selon la revendication 7, 8 ou 9, dans lequel la première section de paroi interne (43) comprend un profil d'accrochage (43a) qui vient se loger sous le renfort d'accrochage (12) en position finale de montage.

11. Distributeur selon l'une quelconque des revendications 7 à 10, dans lequel la patte d'orientation (45) s'étend dans une fenêtre (46) formée dans la jupe (42), cette fenêtre (46) s'étendant avantageusement jusqu'au niveau du renfort d'accrochage (12).

## Patentansprüche

1. Befestigungsring (4) zum Befestigen einer Ausgabeeinrichtung (2), wie eine Pumpe oder ein Ventil, an einem Kragen (11) eines Behälters (1), wobei der Ring (4) Aufnahmemittel (41), die dafür geeignet sind, die Ausgabeeinrichtung (2) aufzunehmen, und einen im Wesentlichen zylindrischen Einrastmantel (42) umfasst, der dafür ausgelegt ist, um den Kragen (11) des Behälters (1) einzugreifen, wobei der Mantel (42) eine Innenwand (42i) definiert, die einen ersten, oberen Innenwandabschnitt (43) zum Eingreifen mit dem Kragen (11) in der endgültigen Montageposition und einen zweiten, unteren Innenwandabschnitt (44) definiert, der dazu ausgelegt ist, sich in der endgültigen Montageposition außer Kontakt mit dem Kragen (11) zu erstrecken, **dadurch gekennzeichnet, dass** der Einrastmantel (42) einen winkeligen Ausrichtungsansatz (45) umfasst, der von dem ersten, oberen Abschnitt (43) verschieden ist, wobei der winkelige Ausrichtungsansatz (45) den zweiten, unteren Innenwandabschnitt (44) unterbricht und in Bezug auf diesen zweiten Abschnitt (44) radial nach innen vorsteht, wobei der winkelige Ausrichtungsansatz (45) in der endgültigen Montageposition außer Kontakt mit dem Kragen (11) ist.

2. Befestigungsring nach Anspruch 1, wobei der Ausrichtungsansatz (45) derart flexibel ist, dass er elastisch in Bezug auf den zweiten Innenwandabschnitt (44) verschiebbar ist.

3. Befestigungsring nach einem der vorhergehenden Ansprüche, wobei sich der Ausrichtungsansatz (45) nur auf dem zweiten Innenwandabschnitt (44) erstreckt.

4. Befestigungsring nach Anspruch 1 oder 2, wobei sich der Ausrichtungsansatz (45) in einem in dem Mantel (42) gebildeten Fenster (46) erstreckt, wobei sich dieses Fenster (46) zumindest auf dem zweiten Innenwandabschnitt (44) erstreckt.

5. Befestigungsring nach einem der vorhergehenden Ansprüche, wobei sich der Ausrichtungsansatz (45) frei nach oben in Richtung des ersten Innenwandabschnitts (43) erstreckt.

6. Befestigungsring nach einem der vorhergehenden Ansprüche, wobei der Einrastmantel (42) eine Außenwand (42e) umfasst, wobei der Ausrichtungsansatz (45) in Bezug auf die Außenwand des Mantels radial nach innen versetzt ist.

7. Spender für ein fluides Produkt, umfassend:
- einen Behälter für ein fluides Produkt (1), umfassend einen Kragen (11), der eine Öffnung (10) definiert, wobei der Kragen (11) eine ringförmige externe Einrastverstärkung (12) bildet,
- eine Ausgabeeinrichtung (2), wie eine Pumpe oder ein Ventil, und
- einen Befestigungsring (4) nach einem der vorhergehenden Ansprüche, um die Ausgabeeinrichtung (2) in der Öffnung (10) des Kragens (11) zu fixieren, wobei der erste, obere Innenwandabschnitt (43) mit der externen ringförmigen Einrastverstärkung (12) des Kragens (11) in Eingriff kommt und sich der zweite, untere Innenwandabschnitt (44) unter der externen ringförmigen Einrastverstärkung (12) außer Kontakt mit dem Kragen (11) erstreckt, wobei sich der Ausrichtungsansatz (45) in der endgültigen Montageposition außer Kontakt mit dem Kragen (11) erstreckt.

8. Spender nach Anspruch 7, wobei die externe ringförmige Einrastverstärkung (12) eine axiale Ausrichtungsnut (14) bildet, in der der Ausrichtungsansatz (45) im Wesentlichen ohne Verformung bei der Montage des Mantels (42) um den Kragen (11) verläuft.

9. Spender nach Anspruch 7 oder 8, wobei der Ausrichtungsansatz (45) in der endgültigen Montageposition unterhalb und außer Kontakt mit der Einrastverstärkung (12) positioniert ist.

10. Spender nach Anspruch 7, 8 oder 9, wobei der erste Innenwandabschnitt (43) ein Einrastprofil (43a) umfasst, welches in der endgültigen Montageposition unter der Einrastverstärkung (12) zum Liegen kommt.

11. Spender nach einem der Ansprüche 7 bis 10, wobei sich der Ausrichtungsansatz (45) in einem in dem Mantel (42) gebildeten Fenster (46) erstreckt, wobei sich dieses Fenster (46) vorteilhafterweise bis zur Einrastverstärkung (12) erstreckt.

## Claims

1. A fastener ring (4) for fastening a dispenser member (2), such as a pump or a valve, on a neck (11) of a reservoir (1), the ring (4) including reception means (41) that are suitable for receiving the dispenser member (2), and a substantially-cylindrical attachment skirt (42) for coming into engagement around the neck (11) of the reservoir (1), the skirt (42) defining an inner wall (42i) that defines a top first inner wall section (43) for coming into engagement with the neck (11) in the final assembled position, and a bottom second inner wall section (44) for extending out of contact with the neck (11) in the final assembled position, the fastener ring being **characterized in that** the attachment skirt (42) includes an angular orientation tab (45) that is distinct from the top first section (43), the angular orientation tab (45) interrupting the bottom second inner wall section (44) and projecting radially inwards relative to the second section (44), the angular orientation tab (45), in the final assembled position, being out of contact with the neck (11).

2. A fastener ring according to claim 1, wherein the orientation tab (45) is flexible in such a manner as to be movable resiliently relative to the second inner wall section (44).

3. A fastener ring according to either preceding claim, wherein the orientation tab (45) extends only over the second inner wall section (44).

4. A fastener ring according to claim 1 or claim 2, wherein the orientation tab (45) extends into a window (46) that is formed in the skirt (42), the window (46) extending over at least the second inner wall section (44).

5. A fastener ring according to any preceding claim, wherein the orientation tab (45) extends freely upwards towards the first inner wall section (43).

6. A fastener ring according to any preceding claim, wherein the attachment skirt (42) includes an outer wall (42e), the orientation tab (45) being offset radially inwards relative to the outer wall of the skirt.

7. A fluid dispenser comprising:
· a fluid reservoir (1) including a neck (11) that defines an opening (10), the neck (11) forming outer annular attachment reinforcement (12);
· a dispenser member (2), such as a pump or a valve; and
· a fastener ring (4) according to any preceding claim for fastening the dispenser member (2) in the opening (10) of the neck (11), the top first inner wall section (43) coming into engagement with the outer annular attachment reinforcement (12) of the neck (11), and the bottom second inner wall section (44) extending below the outer annular attachment reinforcement (12) out of contact with the neck (11), the orientation tab (45) extending out of contact with the neck (11) in the final assembled position.

8. A dispenser according to claim 7, wherein the outer annular attachment reinforcement (12) forms an axial orientation groove (14) in which the orientation tab (45) passes substantially without deforming while the skirt (42) is being mounted around the neck (11).

9. A dispenser according to claim 7 or claim 8, wherein the orientation tab (45) is positioned below and out of contact with the attachment reinforcement (12) in the final assembled position.

10. A dispenser according to claim 7, 8, or 9, wherein the first inner wall section (43) includes an attachment profile (43a) that becomes housed below the attachment reinforcement (12) in the final assembled position.

11. A dispenser according to any one of claims 7 to 10, wherein the orientation tab (45) extends into a window (46) that is formed in the skirt (42), the window (46) advantageously extending up to the attachment reinforcement (12).
